# EUROPÄISCHE PATENTANMELDUNG

(11) **EP 3 984 358 A1**
(43) Veröffentlichungstag der Anmeldung: **20.04.2022**
(21) Anmeldenummer: 20020481.6
(22) Anmeldetag: 19.10.2020
(51) Int. Cl.: A01M 1/20, A01M 1/02, A01M 1/10

(54) **BIOTRONISCHE INSEKTENFALLE**

(71) Anmelder: Zühlke, Thomas, 42653 Solingen (DE)
(72) Erfinder: Zühlke, Thomas, 42653 Solingen (DE)

(57) **Zusammenfassung**

Die Erfindung betrifft eine biotronische trichterförmige Insektenfalle für Fluginsekten, an einem Trägergestell montiert, die beide zum Transport zusammenlegbar sind. Der Trichter hat auf der Innenseite eine Oberfläche mit der Eigenschaft eines Lotusblüteneffekts. Das Innere des Trichters hat eine große Öffnung nach oben und eine kleine Öffnung nach unten. Dadurch kann die Abgabe eines flüchtigen, im Inneren der biotronischen Insektenfalle angeordneten Lockmittels nach oben in die Umgebung gelenkt werden und nach unten können die mit einem biologischen Wirkstoff kontaminierten Insekten entkommen.

## Beschreibung

Die vorliegende Erfindung betrifft eine biotronische Insektenfalle, insbesondere eine biotronische Insektenfalle zum Fangen von Fluginsekten.

Die in den letzten Jahren und Jahrzehnten beobachtete Erhöhung der Jahresdurchschnittstemperaturen durch den Klimawandel und der Zunahme von extremen Witterungsereignissen und Temperaturanstiegen haben in der Land- und Forstwirtschaft zu verschärften Problemen durch Insektenbefall geführt.

Die Bekämpfung der Insekten zur Sicherung der landwirtschaftlichen Ernte wie auch zur Absicherung der Produktqualität verlangt vom landwirtschaftlichen Betrieb hohe Aufwendungen. Hier wird oft klassischer chemischer Pflanzenschutz im Verfahren der guten fachlichen Praxis eingesetzt. Durch die zunehmende Bedeutung einer ökologischen Landwirtschaft zum Schutz der nützlichen Insekten, insbesondere der Bienen, und die entsprechende Zertifizierung vieler Ökobetriebe muss dabei jedoch der Einsatz von ökosystemfremden Stoffen, wie beispielsweise chemischen Pflanzenschutzmitteln, soweit wie möglich verringert werden.

Das gleiche gilt auch für die Forstwirtschaft, wo insbesondere in den letzten Jahren durch den viel zu geringen Jahresniederschlag und der explosionsartigen Vermehrung der Borkenkäfer große Teile des Nadelwaldes zerstört wurden. Zur Begrenzung der Käferdichte unter eine schadenswirksame Schwelle setzen sich zunehmend integrierte Borkenkäfermanagementkonzepte durch, bei denen aktiv mechanische, chemische und insbesondere biologische Maßnahmen kombiniert werden.

Bekannte Verfahren zur aktiven Bekämpfung von "Schadinsekten" in der Land- und Forstwirtschaft sehen den Einsatz vom klassischen Pflanzenschutz in unterschiedlichen Verfahren vor. In der Landwirtschaft wird überwiegend im Spritzverfahren mit dem Traktor gearbeitet. In der Forstwirtschaft werden insbesondere Fangbäume, Trichterfallen, Schlitzfallen, Polterspritzung und Fangholzhaufen eingesetzt.

Der Einsatz von konventionellem chemischem Pflanzenschutz in der Land- und Forstwirtschaft wird nicht zuletzt durch den politischen Willen und der sich veränderten europäischen Vorgehensweise der Zulassungsbehörden immer schwieriger. Die Kosten und Aufwendungen der Pflanzenschutzmittelhersteller für neue Zulassungen haben sich in den letzten 10 Jahren mehr als verdoppelt. Zudem kommt noch eine stärker werdende allgemeine Stimmung in der Bevölkerung auf, dass die Umwelt, das Wasser und die land- und forstwirtschaftlichen Produkte weitestgehend Pflanzenschutzmittel-frei sein sollten.

Der Erfindung liegt daher das technische/biologische Problem zugrunde, ein möglichst effektives Fangsystem für verschiedenste Fluginsekten zu beschreiben, das den zukünftigen Trends der biologischen Bekämpfung von "Schadinsekten" und gleichzeitigen maximal möglichen Schonung der nützlichen Insekten, insbesondere der Bienen, gerecht wird. Hier wird ausdrücklich selektiv, punktuell und gezielt bekämpft und weitestgehend Nützlings-schonend gearbeitet. Insbesondere die flächenweise Behandlung mittels Traktortechnik soll hier ersetzt werden.

Gelöst wird dieses Problem durch die biotronische Insektenfalle mit den Merkmalen des vorliegenden Anspruchs 1. Vorteilhafte Weiterbildungen der erfindungsgemäßen biotronischen Insektenfalle sind Gegenstände der abhängigen Patentansprüche.

Die Erfindung betrifft demnach eine Insektenfalle insbesondere für Fluginsekten, die - analog zu fleischfressenden Pflanzen - eine trichterförmige Form sowie eine Innenbeschichtung vergleichbar mit dem "Lotus Blüten Effekt" besitzt. Die Beschaffenheit des Außenmantels ist den Witterungsbedingungen und den örtlichen Gegebenheiten in Material und Farbe angepasst. Insbesondere die Farbe ist der zu fangenden Insektenart so angepasst, dass sie eine maximal attraktive Wirkung zur erfolgreichen Anlockung der Insektenart besitzt.

Das Trägergestell weist im Betrieb üblicherweise eine pyramidenförmige Allgemeinform auf und umfasst wenigstens drei Standbeine, so dass auch im unebenen Gelände eine stabile Aufstellung der biotronischen Insektenfalle gewährleistet ist. Die Standbeine können zum Transport zusammengelegt werden, was den Platzbedarf der biotronischen Insektenfalle minimiert und auch im unwegsamen Gelände einen problemlosen Transport ermöglicht.

Der Trichter der biotronische Insektenfalle weist wenigstens eine Öffnung oben zur Abgabe eines flüchtigen Lockmittels an die Umgebung sowie eine schmale Öffnung am Ende unten zum Entkommen der Insekten auf. Durch das Lockmittel in der Mitte des Trichters werden die Insekten zu der biotronischen Insektenfalle hingelockt und landen überwiegend auf dem oberen Rand und in den trichterförmigen Mantel. Bei der Bewegung in Richtung Pheromon kommen Sie mit der Innenseite in Kontakt. Durch den "Lotus Blüten Effekt" der Innenseite rutschen die Fluginsekten in das Innere des Trichters nach unten.

Vorzugsweise ist die Öffnung und Befestigung zur Abgabe des flüchtigen Lockmittels in der Mitte der trichterförmigen Insektenfalle vorgesehen. Gemäß einer bevorzugten Ausführungsform weist das Trägergestell dazu eine pyramidenförmige Form auf, an dessen Innenseite der Standbeine an einer Aufhängevorrichtung die biometrische Insektenfalle montiert ist. Entsprechend hat der Mantel der trichterförmigen Insektenfalle mindestens drei Schlaufen am oberen Rand und eine Schlaufe am Trichterausgang unten. Deren Lage - insbesondere der oberen Schlaufen am Trichterrand - sind im Wesentlichen deckungsgleich mit den Befestigungsvorrichtungen des Trägergestells. Die untere Schlaufe dient dabei zum Befestigen des Trichters im Boden, um den Trichter stabil bei jedem Wetter montieren zu können.

Damit das Trägergestell der erfindungsgemäßen Insektenfalle zum Transport leicht zusammengelegt werden kann, kann man gemäß einer Variante der Erfindung vorsehen, dass die Standbeine lösbar, teleskopierbar und einzeln an dem Hohlkörper der biometrischen Insektenfalle montiert sind. Dazu können beispielsweise Befestigungsvorrichtungen vorgesehen sein, die fest oder abnehmbar an den Standbeinen montiert sind. Somit kann man die Standbeine einzeln und in kleinen Packmaßen zusammenlegen.

In beiden Fällen können zwischen benachbarten Standbeinen und/oder zwischen dem Standbein und dem Hohlkörper zusätzliche Querstreben zur Versteifung und Stabilisierung des Gestells vorgesehen sein.

Die Standbeine können auch als Teleskopbeine ausgebildet sein, was insbesondere in Hanglagen eine stabilere Aufstellung der erfindungsgemäßen Insektenfalle ermöglicht.

Bevorzugt können diese Standbeine zur konsequenten Umsetzung der Patentidee aus Holz/Bambus bestehen.

Ferner können an den unteren Enden der Standbeine geeignete Befestigungsmittel zur Verankerung der Insektenfalle im Boden vorgesehen sein. Bei diesen Befestigungsmitteln kann es sich beispielsweise um fest oder abnehmbar mit den Standbeinen verbundene Ösen handeln, in welche z.B. Heringe eingeschlagen werden können. Alternativ können Haken vorgesehen sein, an welchen Zugschnüre befestigt werden, die wiederum mittels Heringen am Boden verankert werden.

Der trichterförmige Mantel wird lose am Trägergestell montiert, um am Ende einer jeden Fluginsektensaison ausgewechselt werden zu können oder um im nächsten Jahr eine neue Bekämpfung durch führen zu können. Damit soll verhindert werden, dass im Spätherbst und im Winter durch Eis, Schnee, Wind und Kälte das Trichtersystem zerstört wird und gewährleistet werden, dass das System im nächsten Jahr wieder voll einsatzfähig ist. Durch die sachgemäße Einlagerung wird somit der Gesamtmaterialeinsatz reduziert, wenn man über mehrere Jahre an selben Standort die Fluginsekten bekämpfen muss/will.

Als Material für die Innenhülle kann jedes zur Beschichtung mit dem "Lotus Blüten Effekt" geeignete Material, beispielsweise Strukturbaumwolle oder Kunststoff, verwendet werden. Bevorzugt ist der Außenmantel in einer Farbe gehalten, die dem Insekt den Eindruck eines potenziell bruttauglichen Materials vermittelt, um so die Fangquote zu erhöhen und die Landung der Fluginsekten attraktiver zu gestalten.

Bevorzugt ist der Trichter zusammenlegbar zum einfachen Transport und Verpacken.

Als Lockmittel sollen artspezifische Stoffe und natürliche oder synthetische, insbesondere synthetische naturidentische Aggregations- und Sexulalpheromone, verwendet werden. Pheromone haben als Mittel zur Insektenbekämpfung und zum Insektenmonitoring im Obst,- Wein und Waldbau zunehmende Bedeutung erlangt. Zahlreiche Pheromone, die als Lockstoffe für Schädlinge in der Land- und Forstwirtschaft wirken, sind bekannt. Hier soll auf die schon seit Jahrzehnten bewährten Produkte der biologischen Kontrolle, dem Monitoring und der Bekämpfung von Fluginsekten insbesondere im Obst,- Wein,- und Waldbau zurückgegriffen werden.

Üblicherweise erfolgt die Abgabe der Pheromone über einen Dispenser oder eine Ampulle in Form eines Folienbeutels oder Röhre/Ampulle aus z.B. Polyethylen, in dem sich ein zelluloseartiger, saugfähiger Stoff befindet oder als fertig formulierte alkoholhaltige (z.B. Methyl-Butanol) Flüssigkeit, der/die mit dem (aus mindestens ein Wirkstoff bestehende) Pheromon getränkt ist. Die Abgabe des Pheromons erfolgt mittels Diffusion durch die z.B. Polyethylenfolie oder der z.B. Polyethylenhülle. Der Pheromon Dispenser oder die Pheromonampulle ist vorzugsweise in einer Alternative an dem Trägergestell oder im Standardfall direkt an dem Insektenfangtrichter integriertem System montiert. Dazu kann alternativ an der Spitze des Trägersystems eine Vorrichtung (Hacken) vorgesehen sein, an welcher der Pheromon-Dispenser oder die Ampulle mit einem Faden aufgehängt werden kann.

Nachdem sich die Insekten in den immer enger werdenden Trichter hinein fortbewegt haben oder heruntergerutscht sind, werden diese am Ende des Trichters mit einem biologischen Wirkstoff "zwangskontaminiert", bevor Sie wieder frei weiterfliegen können. Diese Wirkstoffe bestehen vorzugsweise aus Bakterien, Pilzen oder Nematoden, die artspezifisch den natürlichen Entwicklungszyklus oder die Fortpflanzung der "Schadinsekten" stören und somit zur Bekämpfung von schädlichen Populationen beitragen. Im Normalfall werden nach dem Weiterflug der Insekten auch Insekten gleicher Art an einem anderen Standort bei Berührung oder der Nutzung desselben Standortes zusätzlich kontaminiert. Durch den so entstehenden "Dominoeffekt" wird eine weitaus höhere Menge an Schadinsekten bekämpft, als dies nur durch den Kontakt mit der biotronischen Insektenfalle allein möglich ist.

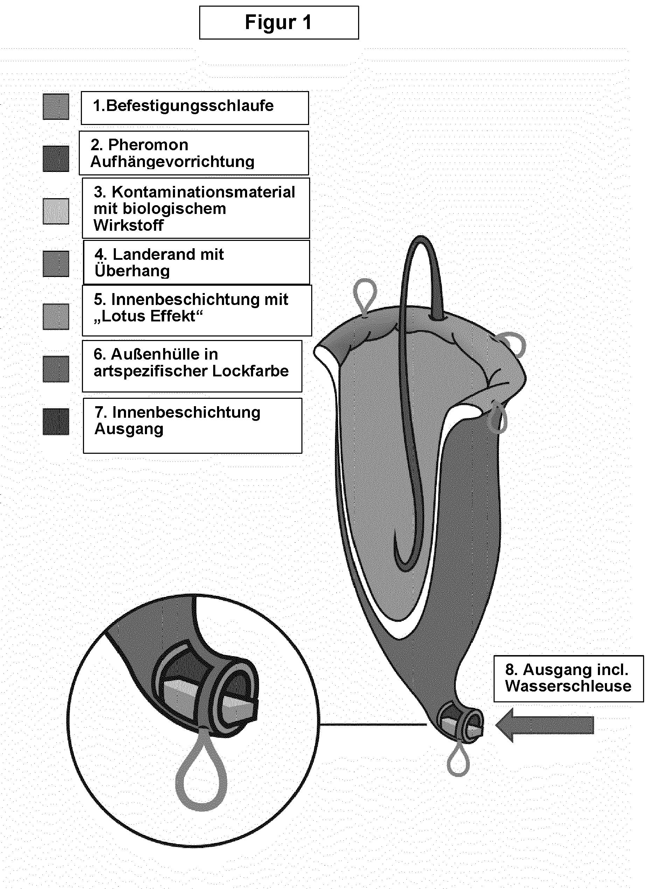

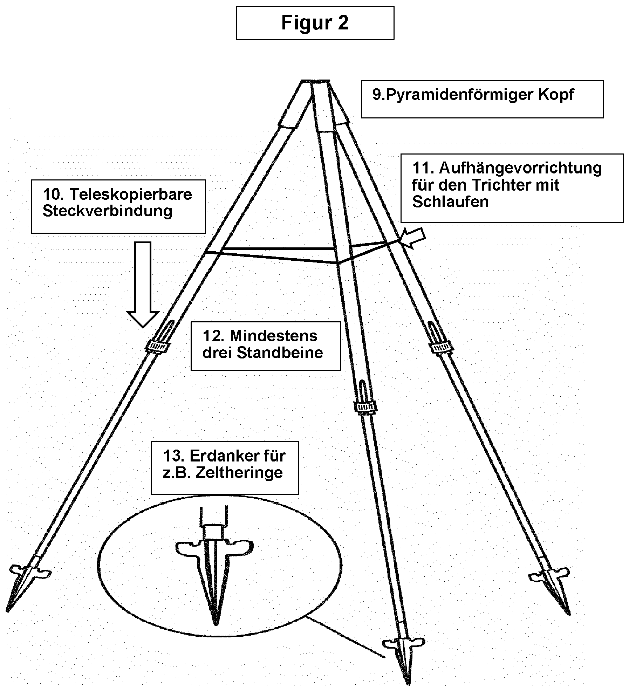

Die erfindungsgemäße biotronische Insektenfalle wird im Folgenden anhand einer in der beigefügten Zeichnung (Figur 1) dargestellten bevorzugten Ausführungsform näher erläutert. In der Zeichnung wird gezeigt:
Das Trägergestell (Figur 2) der erfindungsgemäßen Insektenfallen kann aus Metall, Holz/Bambus (bevorzugt) oder Kunststoff oder aus einer Kombination dieser Materialien bestehen. Als Metall ist auf Grund des geringen Gewichtes insbesondere Aluminium geeignet. Bei einem konsequenten Umsetzen des biologischen Bekämpfungsprinzips wäre die Wahl eines Holzgestelles am besten.

Figur 1 ist eine schematische 2D Ansicht einer bevorzugten Ausführungsform der erfindungsgemäßen biotronischen Insektenfalle im aufgeklappten Zustand. Figur 2 ist eine 2D Ansicht des Gestells der biotronischen Insektenfalle der Figur 1.

In Figur 1 erkennt man eine insgesamt mit der Bezugsziffer 1-8 bezeichnete Ausführungsform der erfindungsgemäßen biotronischen Insektenfalle, die in einem Trägergestell mit der Bezugsziffer 9-13 über Schlaufenverbindungen eingehängt wird. Die biotronische Insektenfalle besteht aus einer trichterförmigen Offnung nach oben, vergleichbar mit einem Trichter einer vergleichbaren fleischfressenden Pflanze.

Das Trägergestell mit der Bezugsziffer 9-13 ist dazu da, das trichterförmige Insektenauffangsystem zu befestigen und auf dem gewünschten Standort aufzustellen. Die obere Öffnung sowie der Rand mit der Bezugsziffer 4 bildet eine bevorzugte Landefläche für die zur Falle gelockten Fluginsekten.

Im dargestellten Beispiel besteht der Mantel mit der Bezugsziffer 6 aus einem für die Fluginsektenart attraktiv gefärbten Gewebe.

Im Bereich der oberen Öffnung des Hohlzylinders mit der Bezugsziffer 4-6 weist der Mantel eine große trichterförmige Öffnung aus, über die die Lockstoffe aus dem Inneren der biotronischen Insektenfalle mit der Bezugsziffer 1-8 in die obere Umgebung entweichen können.

Am unteren Ende des Trichters weist die biometrische Insektenfalle einen schlauchartigen offenen Fortsatz mit der Bezugsziffer 6-7 auf, der im Inneren eine schwammartige Bodenbeschaffenheit hat zur Aufnahme eines biologischen Insektenbekämfungswirkstoffes, wie dies durch die Pfeile mit der Bezugsziffer 8 angedeutet ist. Die "Zwangskontaminationsstelle" ist fest fixiert oder kann auch auswechselbar konstruiert werden. In dieser Öffnung ist ein Wasserablaufsystem integriert, damit der Wirkstoff nicht ausgewaschen werden kann.

Als Lockstoff wird vorzugsweise ein im Inneren der Insektenfalle mit der Bezugsziffer 4-6 angeordneter artspezifischer Pheromondispender/Ampulle verwendet, der an einer Aufhängevorrichtung mit der Bezugsziffer 2 angehängt wird. Alternativ kann das Pheromon auch an einem Faden, der oben an einem Haken hängt, an dem Trägergestell mit der Bezugsziffer 9-12 montiert werden.

## Patentansprüche

1. Biotronische Insektenfalle (Figur 1), insbesondere für Fluginsekten, an einem Trägergestell (Figur 2) aufgehängt, die im Betrieb eine trichterförmige Allgemeinform aufweist und das Trägergestell (9-13) mit wenigstens drei Standbeinen (12) umfasst, die zum Transport zusammenlegbar sind. Die biotronische Insektenfalle besteht zumindest auf der Innenseite (5) aus einer Oberfläche, die die Eigenschaft des "Lotus Blüten Effekts" aufweist, wobei im Innentrichter (5) wenigstens eine große Öffnung nach oben und eine kleine Öffnung nach unten (3,7,8) zur Abgabe eines flüchtigen, im Inneren der biotronische Insektenfalle angeordneten Lockmittels (2) nach oben in die Umgebung ausgespart ist und die nach unten (3,7,8) zum Entkommen der mit einem biologischen Wirkstoff kontaminierten Insekten versehen ist.

2. Biotronische Insektenfalle gemäß Anspruch 1, **dadurch gekennzeichnet, dass** das Trägergestell (9-13) eine pyramidenförmige Spitze (9) aufweist, die einen zentralen Hohlkörper trägt (1-8).

3. Biotronische Insektenfalle gemäß Anspruch 2, **dadurch gekennzeichnet, dass** die Standbeine (12) lösbar und zusammenlegbar an dem Hohlkörper (1-8) montiert sind.

4. Biotronische Insektenfalle gemäß einem der Ansprüche 1 bis 3, **dadurch gekennzeichnet, dass** die Standbeine (10,12) als Teleskopbeine ausgebildet sind.

5. Biotronische Insektenfalle gemäß einem der Ansprüche 2 bis 4, **dadurch gekennzeichnet, dass** der Hohlkörper als trichterförmiger Hohlkörper (1-8) ausgebildet ist.

6. Biotronische Insektenfalle gemäß einem der Ansprüche 1 bis 5 **dadurch gekennzeichnet, dass** der Trichter (1-8) wenigstens eine obere große Öffnung (4-6) aufweist zur Abgabe des Lockmittels in die Umgebung.

7. Biotronische Insektenfalle gemäß einem der Ansprüche 1 bis 6, **dadurch gekennzeichnet, dass** der Trichter (6) mit einer für die jeweilige Insektenart attraktiven Farbe eingefärbt ist.

8. Biotronische Insektenfalle gemäß einem der Ansprüche 1 bis 7, **dadurch gekennzeichnet, dass** das Lockmittel einen Phermondispenser oder eine Pheromonampulle (2) umfasst.

9. Biotronische Insektenfalle gemäß einem der Ansprüche 1 bis 8, **dadurch gekennzeichnet, dass** das Lockmittel aus einem Aggregations- und/oder

10. Sexulalpheromone besteht.

11. Biotronische Insektenfalle gemäß Anspruch 9, **dadurch gekennzeichnet, dass** der Phermondispenser oder die Pheromonampulle an dem Trägergestell des Trichters (4-6) oder direkt an dem Hohlkörper (2,4) so montiert wird, dass das Lockmittel mittig im Trichter hängt.

12. Biotronische Insektenfalle gemäß Anspruch 5-6, **dadurch gekennzeichnet, dass** die Innenseite des Trichters aus einer Beschichtung besteht, die das Abrutschen der Insekten zum unteren Ende des Trichters fördert ("Lotus Blüten Effekt").

13. Biotronische Insektenfalle gemäß Anspruch 1-11, **dadurch gekennzeichnet**, das am unteren Ende des Trichters eine Vorrichtung zur Aufnahme eines biologischen Wirkstoffes eingearbeitet ist, der fest- oder auswechselbar montiert ist und eine Wasserschleuse das Auswaschen des Wirkstoffes verhindert.

14. Biotronische Insektenfalle gemäß Anspruch 1-12, **dadurch gekennzeichnet, dass** die Insekten nach der Berührung mit dem biologischen Wirkstoff am unteren Ende der biotronischen Insektenfall wieder entkommen können.
